# EUROPÄISCHE PATENTSCHRIFT

(11) **EP 1 248 195 B1**
(45) Veröffentlichungstag und Bekanntmachung des Hinweises auf die Patenterteilung: **12.08.2009**
(21) Anmeldenummer: 02006862.3
(22) Anmeldetag: 26.03.2002
(51) Int. Cl.: G06F 11/22, G05B 19/042

(54) **Verbindungsprüfung zwischen einer programmgesteuerten Einheit und einer Schaltung**
Test of connection state between a programmable unit and a circuit
Test de connection entre une unité programmable et un circuit

(30) Priorität: 04.04.2001 DE 10116865
(43) Veröffentlichungstag der Anmeldung: 09.10.2002
(73) Patentinhaber: Infineon Technologies AG, 81669 München (DE)
(72) Erfinder: Barrenscheen, Jens, Dr., 81669 München (DE); Herz, Karl, 81735 München (DE); Fenzl, Gunther, 85635 Höhenkirchen (DE); von Wendorff, Wilhard Dr., 81241 München (DE); Winkler, Oliver, 86169 München (DE); Wenzek, Sven, 45478 Mülheim an der Ruhr (DE); Zimmermann, Michael, 45139 Essen (DE)
(74) Vertreter: Repkow, Ines

(56) Entgegenhaltungen:
- DE-A- 19 743 264
- US-A- 5 202 976
- PATENT ABSTRACTS OF JAPAN vol. 1999, no. 08, 30. Juni 1999 (1999-06-30) & JP 11 085559 A (HITACHI LTD;HITACHI MICROCOMPUT SYST LTD), 30. März 1999 (1999-03-30)
- PATENT ABSTRACTS OF JAPAN vol. 1995, no. 10, 30. November 1995 (1995-11-30) & JP 07 191877 A (TOSHIBA CORP), 28. Juli 1995 (1995-07-28)

## Beschreibung

Die vorliegende Anmeldung betrifft eine Vorrichtung gemäß dem Oberbegriff des Patentanspruchs 1, d.h. eine programmgesteuerte Einheit.

Programmgesteuerte Einheiten wie Mikroprozessoren, Mikrocontroller, Signalprozessoren etc. sind seit vielen Jahren in unzähligen Ausführungsformen bekannt und bedürfen keiner näheren Erläuterung.

Ein bekanntes Problem von programmgesteuerten Einheiten besteht darin, daß es häufig nicht einfach ist, auftretende Fehler zu erkennen, zu lokalisieren, und zu beheben.

Häufig bedient man sich hierzu eines sogenannten Emulators. Ein Emulator ist in der Lage, das Auftreten vorgebbarer Zustände oder Ereignisse zu erkennen und auf eine ebenfalls vorgebbare Art und Weise auf das Auftreten des betreffenden Zustandes oder Ereignisses zu reagieren.

Die vorgebbaren Zustände oder Ereignisse bestehen beispielsweise darin, daß innerhalb oder außerhalb der programmgesteuerten Einheit bestimmte Daten, Adressen oder Steuersignale transferiert werden oder gespeichert sind.

Die vorgebbaren Reaktionen auf das Auftreten solcher oder anderer Zustände oder Ereignisse umfassen beispielsweise das Anhalten der programmgesteuerten Einheit, das Auslesen und/oder das Verändern der Inhalte von Registern oder internen oder externen Speichern, und/oder die Aufzeichnung und Auswertung der zuvor und/oder danach auftretenden Verläufe von interessierenden Daten, Adressen, Signalen, und/oder Register- und Speicherinhalten.

Bekanntlich können in Massenprodukten eingesetzte programmgesteuerte Einheiten, welche im folgenden der Einfachheit halber als Massenproduktions-Version der programmgesteuerten Einheit bezeichnet werden, im allgemeinen nicht in Emulatoren eingesetzt werden, weil bei diesen nur teilweise eine Zugriffsmöglichkeit auf die interessierenden Daten, Adressen, Signale, Register und Speicher besteht, und weil diese nicht über die Möglichkeit verfügen das Auftreten der interessierenden Zustände und Ereignisse in Echtzeit zu überwachen und aufzuzeichnen.

Deshalb werden insbesondere von komplexeren programmgesteuerten Einheiten spezielle Versionen hergestellt, die die erwähnten Zugriffe gestatten und dadurch in Emulatoren einsetzbar sind. Diese speziellen Versionen der programmgesteuerten Einheiten werden im folgenden als Emulations-Versionen bezeichnet.

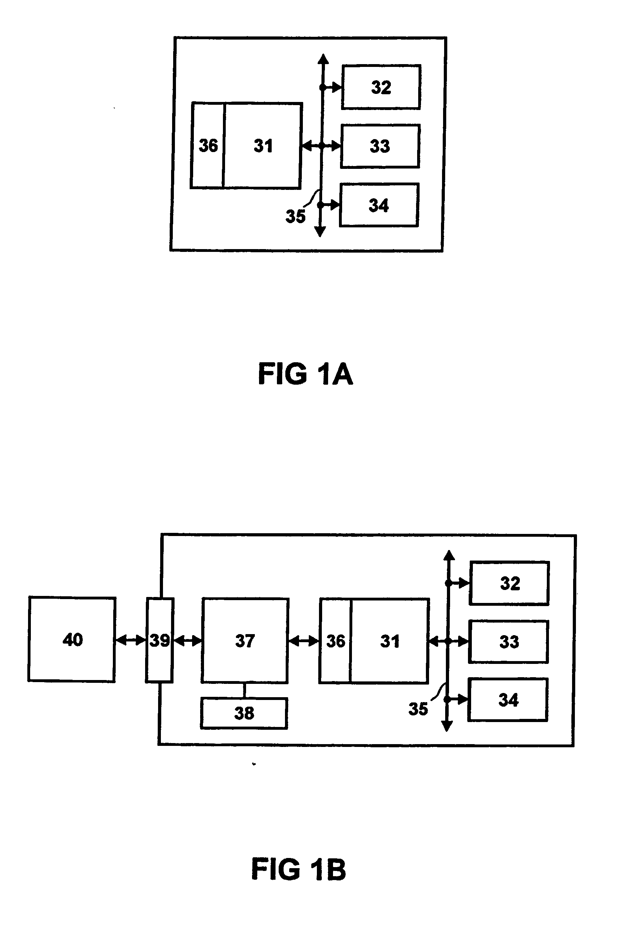

Die Figur 1A zeigt den prinzipiellen Aufbau einer Massenproduktions-Version, und Figur 1B den Aufbau einer Emulations-Version der programmgesteuerten Einheit.

Die in der Figur 1A gezeigte Massenproduktions-Version der programmgesteuerten Einheit enthält einen Core 31, Peripherie-Einheiten 32, 33, und 34 wie beispielsweise Timer, A/D-Wandler, Speicher etc., sowie einen den Core 31 und die Peripherie-Einheiten 32, 33, und 34 verbindenden Bus 35. Der Core 31 enthält darüber hinaus ein Emulations-Interface 36, über welches eine in der Emulations-Version der programmgesteuerten Einheit vorgesehene Emulations-Einheit mit dem Core 31 verbindbar ist.

Die in der Figur 1B gezeigte Emulations-Version der programmgesteuerten Einheit enthält die Massenproduktions-Version, also ebenfalls den Core 31, die Peripherie-Einheiten 32, 33, und 34, den Bus 35, und das Emulations-Interface 36, und zusätzlich für die Emulation der Massenproduktions-Version benötigte Komponenten, wobei diese Komponenten eine Emulations-Einheit 37, Debug-Ressourcen 38, und eine Emulator-Schnittstelle 39 umfassen, über welche die Emulations-Einheit 37 mit einer die Emulation steuernden Steuereinheit 40 verbindbar ist.

Die Emulations-Einheit 37 enthält beispielsweise eine sogenannte Breakpoint- oder Watchpoint-Logik, welche erforderlich ist, um die Zustände oder Ereignisse, deren Auftreten überwacht werden soll, einzustellen, und um das Auftreten der zu überwachenden Zustände oder Ereignisse zu erkennen.

Die Debug-Ressourcen enthalten beispielsweise
- einen sogenannten Overlay-Speicher, in welchen Programme und/oder Daten gespeichert werden können, die während der Emulation anstelle der Programme und/oder Daten verwendet werden sollen, die in dem normalerweise benutzten Speicher gespeichert sind, und
- einen sogenannten Monitor-Speicher, in welchem während der Emulation auszuführende Debug-Sequenzen gespeichert sind.

Emulations-Versionen nach Art der Figur 1B können (müssen aber nicht) Multi-Chip-Module sein wie sie beispielsweise in der DE 197 432 64 beschrieben sind.

Bei solchen Multi-Chip-Modulen werden die Komponenten, die in der Massenproduktions-Version der programmgesteuerten Einheit gemäß Figur 1A, und die Komponenten, die die Emulations-Version der programmgesteuerten Einheit demgegenüber zusätzlich aufweist, auf verschiedenen Chips untergebracht, und diese verschiedenen Chips werden bei Bedarf (bei der Herstellung einer Emulations-Version der programmgesteuerten Einheit) in geeigneter Weise miteinander verbunden.

Eine solche Vorgehensweise hat den Vorteil, daß sich der Aufwand, der zur Herstellung einer Emulations-Version der programmgesteuerten Einheit zu treiben ist, auf die Entwicklung und Herstellung eines die zur Emulation benötigten Komponenten enthaltenden Chips beschränkt; die Massenproduktions-Version kann ohne oder jedenfalls ohne nennenswerte Änderungen auch in der Emulations-Version der programmgesteuerten Einheit verwendet werden.

Allerdings müssen besondere Vorkehrungen getroffen werden, durch welche gewährleistet werden kann, daß die Massenproduktions-Version der programmgesteuerten Einheit sowohl alleine als auch in der Emulations-Version unter allen Umständen ordnungsgemäß arbeitet. Dieses Problem wurde bislang noch nicht zur vollen Zufriedenheit gelöst.

Entsprechende Probleme können auch auftreten, wenn die programmgesteuerte Einheit mit nicht immer vorhandenen anderen Schaltungen kooperieren können muß, wobei es keine Rolle spielt, ob diese Schaltungen auf dem selben Chip wie die programmgesteuerte Einheit oder auf einem anderen Chip untergebracht sind.

In
- PATENT ABSTRACTS OF JAPAN, Bd. 1999, Nr. 08, 30 Juni 1999 & JP 11 0855559,
- F. HALSALL: "Data communication, computer networks and OSI", Eddison-Wesley, 1988, Seiten 54-58,
- der DE 200 12 567 U1, und
- der US 6,131,125
sind verschiedene Möglichkeiten für die Kooperation von mehreren Schaltungen beschrieben. Die beschriebenen Möglichkeiten sind jedoch nicht voll zufriedenstellend.

Der vorliegenden Erfindung liegt daher die Aufgabe zugrunde, eine programmgesteuerte Einheit zu finden, welche sowohl alleine als auch im Zusammenwirken mit anderen Schaltungen unter allen Umständen ordnungsgemäß arbeitet.

Diese Aufgabe wird erfindungsgemäß durch die in Patentanspruch 1 beanspruchte programmgesteuerte Einheit gelöst.

Bei einer wie beansprucht ausgebildeten programmgesteuerten Einheit ist auf einfache Weise zuverlässig verhinderbar,
- daß die programmgesteuerte Einheit auf eine nicht vorhandene Systemkomponente zuzugreifen versucht,
- daß die programmgesteuerte Einheit auf Daten reagiert, die von einer Systemkomponente zu kommen scheinen, die gar nicht vorhanden ist,
- daß die programmgesteuerte Einheit mit einer mit ihr verbundenen Systemkomponente nicht ordnungsgemäß kommunizieren oder kooperieren kann, weil Zugriffe der programmgesteuerte Einheit auf diese (erste) Systemkomponente mit Zugriffen einer zweiten Systemkomponente auf die erste Systemkomponente kollidieren, und
- daß Informationen, die die programmgesteuerte Einheit in die erste Systemkomponente schreibt und/oder die die erste Systemkomponente über die programmgesteuerte Einheit gespeichert hat, durch die zweite Systemkomponente
   - nicht abgeholt und ausgewertet werden, bevor sie vollständig und/oder gültig sind,
   - nicht abgeholt und ausgewertet werden, wenn sie nicht mehr aktuell oder nicht mehr gültig sein könnten, und/oder
   - sofort abgeholt und ausgewertet werden, sobald sie vollständig und/oder gültig sind.

Bei wie beansprucht ausgebildeten programmgesteuerten Einheiten ist gewährleistet, daß sie sowohl alleine als auch im Zusammenwirken mit anderen Schaltungen ordnungsgemäß arbeiten.

Vorteilhafte Weiterbildungen der Erfindung sind den Unteransprüchen, der folgenden Beschreibung und den Figuren entnehmbar.

Die Erfindung wird nachfolgend anhand eines Ausführungsbeispiels unter Bezugnahme auf die Figuren näher erläutert. Es zeigen
- Figur 1A: eine herkömmliche Massenproduktions-Version einer programmgesteuerten Einheit,
- Figur 1B: eine herkömmliche Emulations-Version einer programmgesteuerten Einheit,
- Figur 2: eine im folgenden näher beschriebene Emulations-Version einer programmgesteuerten Einheit, und
- Figur 3: eine Darstellung der in der Figur 2 gezeigten Emulations-Version einer programmgesteuerten Einheit, bei welcher einige der Besonderheiten der im folgenden beschriebenen programmgesteuerten Einheit detaillierter dargestellt sind.

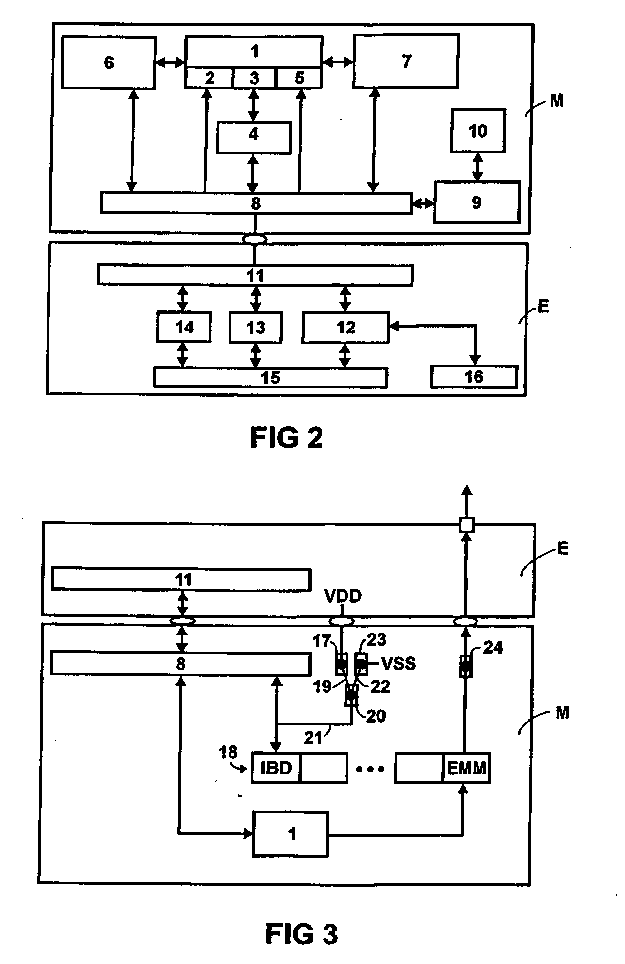

Die Figur 2 zeigt den prinzipiellen Aufbau der Emulations-Version der vorliegend näher betrachteten programmgesteuerten Einheit.

Die gezeigte programmgesteuerte Einheit besteht aus einem Massenproduktions-Teil M und einem Emulations-Teil E, wobei diese Teile auf dem selben oder auf verschiedenen Halbleiter-Chips untergebracht sein können, und wobei der Massenproduktions-Teil M wahlweise alleine (ohne Emulations-Teil E, also als Massenproduktions-Version der programmgesteuerte Einheit) oder zusammen mit dem Emulations-Teil E (in der Emulations-Version) der programmgesteuerte Einheit verwendbar ist.

Der Massenproduktions-Teil M enthält
- eine ein Programm ausführende CPU 1,
- eine mit der CPU 1 verbundene oder in dieser enthaltene Break-Schaltung 2 zum Anhalten der CPU 1,
- eine mit der CPU 1 verbundene oder in dieser enthaltene Inject-Schaltung 3 und einen dieser vorgeschalteten Interrupt Controller 4 zum Injizieren von in dem von der CPU 1 auszuführenden Programm nicht enthaltenen Befehlen,
- eine mit der CPU 1 verbundene oder in dieser enthaltene Trace-Schaltung 5, über welche veranlaßbar ist, daß ausgewählte Adressen, Daten, Signale, Speicher- und Registerinhalte in einem üblicherweise im Emulations-Teil untergebrachten Trace-Speicher gespeichert werden,
- einen mit der CPU 1 verbundenen Programmspeicher 6 zum Speichern eines im Normalbetrieb der programmgesteuerten Einheit von der CPU 1 auszuführenden Programms,
- einen mit der CPU 1 verbundenen Datenspeicher 7 zum Speichern von zur Befehlsausführung benötigten und durch die Befehlsausführung erzeugten Daten,
- eine mit der Breakschaltung 2, dem Interrupt-Controller 4, der Trace-Schaltung 5, dem Programmspeicher 6, und dem Datenspeicher 7 verbundene Emulations-Schnittstelle 8 zum Anschließen des Emulations-Teils E an den Massenproduktions-Teil M,
- ein mit der Emulations-Schnittstelle 8 verbundenes, im folgenden als OCDS-Modul bezeichnetes On Chip Debug Support Modul 9, und
- eine im betrachteten Beispiel durch eine JTAG-Schnittstelle gebildete, aber auch durch eine andere Schnittstelle realisierbare Schnittstelle 10, über welche das OCDS-Modul 9 mit außerhalb der programmgesteuerten Einheit vorgesehenen Systemkomponenten kommunizieren kann.

Der Emulations-Teil E enthält
- eine Emulations-Schnittstelle 11 zum Anschließen des Emulations-Teils E an den Massenproduktions-Teil M,
- eine mit der Emulations-Schnittstelle 11 verbundene Emulations-Einheit 12,
- einen mit der Emulations-Schnittstelle 11 verbundenen Monitor-Speicher 13, in welchem zur Überwachung des Massenproduktions-Teils M dienende Programme (Debug-Sequenzen, Monitor-Programme) gespeichert sind,
- einen mit der Emulations-Schnittstelle 11 verbundenen Overlay-Speicher 14, welchen der Massenproduktions-Teil M anstelle des Programmspeichers 6 als Programmspeicher verwenden kann,
- eine mit der Emulations-Einheit 12, dem Monitor-Speicher 13, und dem Overlay-Speicher 14 verbundene Emulator-Schnittstelle 15 zum Anschluß des Emulations-Teils E an die außerhalb der programmgesteuerte Einheit vorgesehene, die Emulation steuernde Steuereinheit 40, und
- eine mit der Emulations-Einheit 12 verbundene, im betrachteten Beispiel durch eine JTAG-Schnittstelle gebildete, aber auch durch eine andere Schnittstelle realisierbare zweite Schnittstelle 16, über welche die Emulations-Einheit 12 mit außerhalb der programmgesteuerten Einheit vorgesehenen Systemkomponenten kommunizieren kann, welche aber anders aufgebaut ist als die Emulator-Schnittstelle 15.

Der Massenproduktions-Teil M der betrachteten programmgesteuerten Einheit kann auf drei verschiedene Arten emuliert werden, nämlich
1) über die JTAG-Schnittstelle 10, das OCDS-Modul 9, die Emulations-Schnittstelle 8 und die damit verbundenen weiteren Komponenten des Massenproduktions-Teils M,
2) über die JTAG-Schnittstelle 16, die Emulations-Einheit 12, und die Emulations-Schnittstelle 11 des Emulations-Teils E, sowie die Emulations-Schnittstelle 8 und die damit verbundenen weiteren Komponenten des Massenproduktions-Teils M, und
3) über die Emulator-Schnittstelle 15, die Emulations-Einheit 12, den Monitor-Speicher 13, den Overlay-Speicher 14, und die Emulations-Schnittstelle 11 des Emulations-Teils E, sowie die Emulations-Schnittstelle 8 und die damit verbundenen weiteren Komponenten des Massenproduktions-Teils M,
wobei durch die Möglichkeit 1) der Massenproduktions-Teil M auch ohne den Emulations-Teil E in einem gewissen eingeschränkten Umfang emulierbar ist (das OCDS-Modul bietet nur eingeschränkte Möglichkeiten zur Emulation des Massenproduktions-Teils M),
wobei durch die Möglichkeit 2) der Massenproduktions-Teil M umfangreicher und/oder komfortabler emulierbar ist (die Emulations-Einheit 12 weist einen größeren Funktionsumfang als das OCDS-Modul 9, oder zusätzliche Emulationsfunktionen auf), und
wobei durch die Möglichkeit 3) der Massenproduktions-Teil M noch umfangreicher und/oder komfortabler emulierbar ist (die Emulation kann zusätzlich unter Verwendung des Monitor-Speichers 13, des Overlay-Speichers 14 und gegebenenfalls weiterer, in der Figur 2 nicht gezeigter Debug-Ressourcen wie beispielsweise eines sogenannten Trace-Speicher erfolgen).

Die in der Figur 2 gezeigte programmgesteuerte Einheit weist neben dem vorstehend beschriebenen Aufbau einige Besonderheiten auf, die im folgenden unter Bezugnahme auf Figur 3 und die vorstehend bereits erläuterte Figur 2 näher beschrieben werden.

Eine dieser Besonderheiten besteht darin, daß die programmgesteuerte Einheit, genauer gesagt die Massenproduktions-Version bzw. der Massenproduktions-Teil M der Emulator-Version einen Eingangsanschluß aufweist, über welchen ihr signalisiert werden kann, ob die programmgesteuerte Einheit mit einer bestimmten anderen Schaltung verbunden ist.

Die Signalisierung erfolgt vorzugsweise, aber nicht zwingend durch die Schaltung, deren Vorhandensein dadurch erkennbar sein soll.

Bei der Schaltung handelt es sich im betrachteten Beispiel um den Emulations-Teil E der programmgesteuerten Einheit; die Schaltung kann aber auch eine beliebige andere Schaltung (beispielsweise ein Speicher oder ein A/D-Wandler) sein, wobei diese Schaltung auf dem selben Chip wie die programmgesteuerte Einheit oder auf einem anderen Chip als die programmgesteuerte Einheit vorgesehen sein kann.

Der besagte Eingangsanschluß, über welchen dem Massenproduktions-Teil M das Vorhandensein des Emulations-Teils E signalisiert wird, ist in der Figur 3 mit dem Bezugszeichen 17 bezeichnet und wird im folgenden als Detektionsanschluß bezeichnet.

Die in der Figur 3 gezeigte programmgesteuerte Einheit entspricht, obgleich nicht alle Komponenten der in der Figur 2 gezeigten programmgesteuerten Einheit dargestellt sind, der in der Figur 2 gezeigten programmgesteuerten Einheit.

Der Detektionsanschluß 17 ist im betrachteten Beispiel ein Pad des Massenproduktions-Teils M, der mit einem zugeordneten, in den Figuren nicht gezeigten Anschluß der Emulations-Teils E verbunden ist (sofern ein Emulations-Teil E vorhanden ist), und welcher innerhalb des Massenproduktions-Teils M mit der Emulations-Schnittstelle 8 und einem den Status des Detektionsanschlusses 17 anzeigenden Speicherelement IBD eines Emulations-Steuerspeichers 18 verbunden ist. Die Verbindung mit der Emulations-Schnittstelle 8 und dem Speicherelement IBD erfolgt über einen Bonddraht 19, welcher den Detektionsanschluß 17 mit einem weiteren Pad 20 verbindet, und einer Leitung 21, wobei der weitere Pad 20 wahlweise über den Bonddraht 19 mit dem Detektionsanschluß 17 oder über einen Bonddraht 22 mit einem im folgenden als Deaktivierungs-Pad bezeichneten Pad 23 des Massenproduktions-Teils M verbunden ist. Der Deaktivierungs-Pad 23 ist dauerhaft, und unabhängig davon, ob der Emulations-Teil E angeschlossen ist oder nicht, mit einem Potential beaufschlagt, dessen Auswertung zu dem Ergebnis führt, daß am Massenproduktions-Teil M kein Emulations-Teil E angeschlossen ist.

Im betrachteten Beispiel wird im Massenproduktions-Teil M davon ausgegangen, daß ein Emulations-Teil E angeschlossen ist, wenn dem Pad 20 das Potential VDD zugeführt wird. In diesem Fall wird der Deaktivierungs-Pad 23 mit dem Potential VSS beaufschlagt.

Der Vollständigkeit halber sei angemerkt, daß VDD und VSS auch vertauscht werden können, und daß anstelle von VDD und VSS auch beliebige andere Potentiale verwendet werden können. Die Signale, durch die signalisiert wird, ob am Massenproduktions-Teil M ein Emulations-Teil E angeschlossen ist oder nicht, sind aber vorzugsweise statische, d.h. dauerhaft einen bestimmten Pegel aufweisende Signale. Dadurch läßt es sich besonders einfach feststellen, ob am Massenproduktions-Teil M ein Emulations-Teil E angeschlossen ist oder nicht.

Falls dem Massenproduktions-Teil M, genauer gesagt dem Pad 20 desselben ein Signal zugeführt wird, durch das signalisiert wird, daß am Massenproduktions-Teil M kein Emulations-Teil E angeschlossen ist, ignoriert der Massenproduktions-Teil M Daten, die von einem Emulations-Teil E kommen oder zu kommen scheinen, und/oder unterläßt es, Daten zum Emulations-Teil E auszugeben. Dies geschieht im betrachteten Beispiel über eine entsprechende Ansteuerung der Emulations-Schnittstelle 8 und einen in der Figuren nicht gezeigten Verriegelungsmechanismus, durch welchen abhängig vom Inhalt des Emulations-Steuerspeichers 18, genauer gesagt abhängig vom Inhalt des Elementes IBD desselben, Zugriffe auf den Emulations-Teil E freigegeben oder gesperrt werden.

Im anderen Fall, d.h. wenn dem Massenproduktions-Teil M, genauer gesagt dem Pad 20 desselben ein Signal zugeführt wird, durch das signalisiert wird, daß am Massenproduktions-Teil M ein Emulations-Teil E angeschlossen ist, können der Massenproduktions-Teil M und der Emulations-Teil E ordnungsgemäß kommunizieren und kooperieren.

Dadurch, daß der Pad 20 wahlweise mit dem Detektionsanschluß 17 oder mit dem Deaktivierungs-Pad 23 verbindbar ist, kann im Massenproduktions-Teil M festgelegt werden, ob dieser mit einem Emulations-Teil E kommunizieren und kooperieren können soll. Durch die Verbindung des Pads 20 mit dem Deaktivierungs-Pad 23 kann bei Bedarf zuverlässig verhindert werden, daß der Massenproduktions-Teil M mit einer an die Emulations-Schnittstelle 8 angeschlossenen Einrichtung kommunizieren und kooperieren kann. Dadurch kann verhindert werden, daß im Massenproduktions-Teil M gespeicherte geheime Daten durch Freilegen des Chips und Anzapfen der Emulations-Schnittstelle 8 ausgelesen werden können.

Der Vollständigkeit halber sei angemerkt, daß der Emulations-Steuerspeicher 18 neben dem Element IBD weitere Elemente enthält, in welchen für die Emulation und/oder die Kommunikation und/oder die Kooperation mit dem Emulations-Teil E hilfreiche Informationen gespeichert oder zwischengespeichert sind.

Eine weitere Besonderheit der vorliegend betrachteten programmgesteuerten Einheit besteht darin, daß die programmgesteuerte Einheit einen Anschluß aufweist, über welchen sie dem Emulator signalisiseren kann, daß sie einen Zugriff auf das Emulations-Teil E ausführt, bzw. - allgemeiner und für beliebige andere Systemkonfigurationen ausgedrückt - daß die programmgesteuerte Einheit einen Anschluß aufweist, über welchen sie einer externen Einrichtung signalisiseren kann, daß sie gerade mit einer bestimmten anderen an ihr angeschlossenen Einrichtung kommuniziert oder kooperiert.

Der besagte Anschluß ist in der Figur 3 ein mit dem Bezugszeichen 24 bezeichneter Pad und wird im folgenden als Zugriffsanzeige-Pad bezeichnet.

Der Zugriffsanzeige-Pad 24 ist mit einem in den Figuren nicht gezeigten Pad des Emulations-Teils E verbunden und wird durch den Emulations-Teil E der daran angeschlossenen Suereinheit 40 zugeführt. Der Vollständigkeit halber sei darauf hingewiesen, daß die Zuführung dieses Signals zur Steuereinheit nicht über den Emulations-Teil E erfolgen muß. Die Übertragung dieses Signals zur Steuereinheit könnte auch über einen Anschluß des Massenproduktions-Teils M erfolgen, der direkt mit der Steuereinheit verbunden ist.

Der Zugriffsanzeige-Pad 24 ist innerhalb des Massenproduktions-Teils M mit einem Speicherelement EMM des Emulations-Steuerspeichers 18 verbunden. Das Speicherelement EMM wird durch eine Logik beschrieben, welche detektiert, ob der Massenproduktions-Teil M auf den Emulations-Teil E zugreift.

Im betrachteten Beispiel wird der Steuereinheit über das Zugriffsanzeige-Pad 24 signalisiert, wenn das Massenproduktions-Teil M auf eine Komponente des Emulations-Teils E zugreift, auf die auch die Steuereinheit Zugriff hat.

Die der Steuereinheit signalisierten Zugriffe des Massenproduktions-Teils M auf den Emulations-Teil E können ausschließlich solche Zugriffe sein, die auf eigene Veranlassung des Massenproduktions-Teils erfolgen, oder deren Zeitpunkt der Steuereinheit nicht bekannt ist. Es können aber auch weitere oder alle Zugriffe signalisiert werden.

Die Zugriffs-Signalisierung erweist sich als vorteilhaft, weil die programmgesteuerte Einheit dadurch die die Emulation steuernde Steuereinheit synchronisieren kann. Dadurch kann verhindert werden,
- daß die Steuereinheit im Emulations-Teil gespeicherte Daten löscht oder überschreibt, die der Massenproduktions-Teil M noch benötigen könnte oder benötigen wird, und
- daß die Steuereinheit im Emulations-Teil oder im Massenproduktions-Teil gespeicherte Daten ausliest und auswertet, bevor die auszuwertenden Daten dort gespeichert sind, oder nachdem die auszuwertenden Daten bereits wieder gelöscht oder überschrieben sind, oder wenn die Daten schon veraltet sind.

Dies läßt sich beispielsweise dadurch erreichen, daß der Massenproduktions-Teil M durch eine steigende Flanke in dem über den Zugriffsanzeige-Pad 24 ausgegebenen Signal signalisiert, daß er einen Zugriff auf den Emulations-Teil E begonnen hat und daß der Massenproduktions-Teil M durch eine fallende Flanke in dem über den Zugriffsanzeige-Pad 24 ausgegebenen Signal signalisiert, daß er einen Zugriff auf den Emulations-Teil E beendet hat (oder umgekehrt). Dann kann die Steuereinheit an der steigenden Flanke (am hohen Pegel) des Signals erkennen, daß sie bis auf weiteres (bis zur fallenden Flanke) im Emulations-Teil keine oder nur bestimmte Daten löschen oder überschreiben darf, und daß von ihr danach aus dem Emulations-Teil ausgelesene und ausgewertete Daten möglicherweise noch nicht oder nicht mehr die eigentlich auszuwertenden Daten sind; an der fallenden Flanke (am niedrigen Pegel) des Signals kann die Steuereinheit erkennen, daß sie nun wieder Daten in der programmgesteuerten Einheit löschen und überschreiben kann, und/oder daß sie sofort oder alsbald mit dem Auslesen und Auswerten von in der programmgesteuerte Einheit gespeicherten Daten beginnen sollte oder muß.

Dadurch ist es möglich, daß das Anwendungsprogramm die Ausführung einer im Monitor-Speicher 13 gespeicherten Debug-Sequenz veranlaßt, um beispielsweise ein zu Emulationszwecken erforderliches Auslesen oder Verändern von Register- oder Speicherinhalten durchzuführen. Die Ausführung von im Monitor-Speicher 13 gespeicherten Programmen wird bislang ausschließlich durch die Steuereinheit veranlaßt. Dadurch, daß dies durch die vorstehend erwähnten Maßnahmen nunmehr auch durch das Anwendungsprogramm erfolgen kann, kann auch eine Emulation von programmgesteuerten Einheiten durchgeführt werden, bei welchen die zur Ausführung eines im Monitor-Speicher 13 gespeicherten Programmes erforderliche Unterbrechung des Anwendungsprogrammes nur in ganz bestimmten (nicht zeitkritischen) Phasen des Anwendungsprogrammes erfolgen darf, oder anderenfalls die untersuchte Anwendung so gestört wird, daß sich das die programmgesteuerte Einheit enthaltende System nicht mehr wie im normalen Betrieb verhält.

Dies wäre ohne die beschriebene oder eine vergleichbare Zugriffs-Signalisierung nicht möglich, weil die Steuereinheit in diesem Fall ja keine Information darüber hätte, wann sie auf die programmgesteuerte Einheit zugreifen darf oder muß, um die ihr obliegenden Aufgaben zu erfüllen. Die Zugriffs-Signalisierung eröffnet mithin ganz neue Möglichkeiten zur Emulation von programmgesteuerten Einheiten.

Das Programm, das die Ausführung eines im Monitor-Speicher 13 gespeicherten Programmes veranlaßt, kann Muß aber nicht) ein im Overlay-Speicher 14 gespeichertes Programm sein, dessen Ausführung vom Emulator veranlaßt wurde. Bei diesem Programm handelt es sich um ein aus einer Modifikation des in normalen Betrieb ausgeführten Anwendungsprogramm hervorgegangenes Programm. Das im Overlay-Speicher gespeicherte modifizierte Anwendungsprogramm entspricht dem im normalen Betrieb ausgeführten Anwendungsprogramm, enthält aber an zeitlich nicht kritischen Stellen Aufrufe von Debug-Sequenzen aus dem Monitor-Speicher.

Unabhängig hiervon enthält der Emulations-Teil der programmgesteuerten Einheit einen Mechanismus, durch welchen gleichzeitige Zugriffe des Massenproduktions-Teils M und des Steuerteils auf die selbe Komponente des Emulations-Teils verhindert werden. Im betrachteten Beispiel ist es so, daß der Zugriff des Massenproduktions-Teils M Vorrang hat. Dies kann selbstverständlich auch umgekehrt sein oder von Komponente zu Komponente variieren.

Ferner kann der Emulations-Teil E der programmgesteuerten Einheit einen Mechanismus enthalten, durch welche Zugriffe des Massenproduktions-Teils auf den Monitor-Speicher unterbunden werden. Dadurch kann verhindert werden, daß ein nicht ordnungsgemäß ablaufendes Programm den Monitor-Speicher überschreibt und dadurch gänzlich unkontrollierbar wird. Dieser Mechanismus kann beispielsweise im Emulations-Interface des Emulations-Teils enthalten sein und Schreibzugriffe auf den vom Monitor-Speicher belegten Speicherbereich unterbinden.

Ein weiterer Schutzmechanismus der betrachteten programmgesteuerten Einheit kann darin bestehen, daß die Ausgangstreiber eines in der programmgesteuerten Einheit enthaltenen Trace-Speichers abschaltbar sind. Auf diese Weise kann verhindert werden, daß geheimzuhaltende Programme, die in der programmgesteuerten Einheit gespeichert sind, über die Steuereinheit ausgelesen werden können.

Eine wie beschrieben ausgebildete programmgesteuerte Einheit kann unabhängig von den Einzelheiten der praktischen Realisierung besser mit daran angeschlossenen Einrichtungen kommunizieren und kooperieren als es bisher der Fall ist, aber gleichzeitig auch ohne diese Einrichtungen unter allen Umständen fehlerfrei arbeiten.

### Bezugszeichenliste

- 1: CPU
- 2: Break-Schaltung
- 3: Inject-Schaltung
- 4: Interrupt Controller
- 5: Trace-Schaltung
- 6: Programmspeicher
- 7: Datenspeicher
- 8: Emulations-Schnittstelle
- 9: OCDS-Modul
- 10: JTAG-Schnittstelle
- 11: Emulations-Schnittstelle
- 12: Emulations-Einheit
- 13: Monitor-Speicher
- 14: Overlay-Speicher
- 15: Emulator-Schnittstelle
- 16: JTAG-Schnittstelle
- 17: Detektionsanschluß
- 18: Emulations-Steuerspeicher
- 19: Bonddraht
- 20: weiterer Pad
- 21: Leitung
- 22: Bonddraht
- 23: Deaktivierungs-Pad
- 24: Zugriffsanzeige-Pad
- 31: CPU
- 32 - 34: Peripherie-Einheiten
- 35: Bus
- 36: Emulations-Interface
- 37: Emulations-Einheit
- 38: Debug-Ressourcen
- 39: Emulator-Schnittstelle
- 40: Steuereinheit

- E: Emulations-Teil
- M: Massenproduktions-Teil

## Patentansprüche

1. Programmgesteuerte Einheit,
- wobei die programmgesteuerte Einheit (M) einen Anschluß (17) aufweist, über welchen der programmgesteuerten Einheit signalisiert werden kann, ob die programmgesteuerte Einheit mit einer bestimmten anderen Schaltung (E) verbunden ist,
- wobei die programmgesteuerte Einheit (M) davon ausgeht, daß sie mit der bestimmten anderen Schaltung (E) verbunden ist, wenn und so lange ihr über den besagten Anschluß ein bestimmtes Signal zugeführt wird,
- wobei es sich bei dem Signal, das der programmgesteuerten Einheit (M) zugeführt werden muß, damit diese davon ausgeht, daß sie mit der bestimmten anderen Schaltung (E) verbunden ist, um ein einen dauerhaft hohen oder dauerhaft niedrigen Spannungspegel aufweisendes Signal handelt, und
- wobei die programmgesteuerte Einheit (M) dann, wenn sie nicht mit der bestimmten anderen Schaltung (E) verbunden zu sein scheint, nicht versucht, mit der bestimmten anderen Schaltung zu kommunizieren oder zu kooperieren.

2. Programmgesteuerte Einheit nach Anspruch 1,
**dadurch gekennzeichnet,**
**daß** die programmgesteuerte Einheit (M) dann, wenn sie nicht mit der bestimmten anderen Schaltung (E) verbunden zu sein scheint, von der bestimmten anderen Schaltung zu kommen scheinende Daten ignoriert.

3. Programmgesteuerte Einheit nach einem der vorhergehenden Ansprüche,
**dadurch gekennzeichnet,**
**daß** die programmgesteuerte Einheit (M) eine Schnittstelle (8) aufweist, welche für den Austausch von Daten zwischen der programmgesteuerten Einheit und der bestimmten anderen Schaltung (E) reserviert ist, und daß diese Schnittstelle dann, wenn die programmgesteuerte Einheit nicht mit der bestimmten anderen Schaltung verbunden zu sein scheint, die ihr zugeführten Daten nicht weiterleitet.

4. Programmgesteuerte Einheit nach einem der vorhergehenden Ansprüche,
**dadurch gekennzeichnet,**
**daß** Vorkehrungen (20, 22, 23) getroffen sind, die es ermöglichen, daß die programmgesteuerte Einheit (M) anstelle des Signals, das ihr über den besagten Anschluß (17) zugeführt wird, ein innerhalb der programmgesteuerten Einheit verfügbares anderes Signal auswertet.

5. Programmgesteuerte Einheit nach Anspruch 4,
**dadurch gekennzeichnet,**
**daß** das andere Signal ein Signal ist, durch welches angezeigt wird, daß die programmgesteuerte Einheit (M) nicht mit der bestimmten Schaltung (E) verbunden ist.

## Claims

1. Program-controlled unit,
- wherein the program-controlled unit (M) has a connection (17) which can be used to signal to the program-controlled unit whether the program-controlled unit is connected to a particular other circuit (E),
- wherein the program-controlled unit (M) assumes that it is connected to the particular other circuit (E) if and so long as it is supplied with a particular signal via said connection,
- wherein the signal which needs to be supplied to the program-controlled unit (M) so that the latter assumes that it is connected to the particular other circuit (E) is a signal which is at a permanently high or permanently low voltage level, and
- wherein, if it does not appear to be connected to the particular other circuit (E), the program-controlled unit (M) does not attempt to communicate or cooperate with the particular other circuit.

2. Program-controlled unit according to Claim 1,
**characterized**
**in that**, if it does not appear to be connected to the particular other circuit (E), the program-controlled unit (M) ignores data which appear to come from the particular other circuit.

3. Program-controlled unit according to one of the preceding claims,
**characterized**
**in that** the program-controlled unit (M) has an interface (8) which is reserved for the interchange of data between the program-controlled unit and the particular other circuit (E), and in that, if the program-controlled unit does not appear to be connected to the particular other circuit, this interface does not forward the data which are supplied to it.

4. Program-controlled unit according to one of the preceding claims,
**characterized**
**in that** precautions (20, 22, 23) are taken which allow the program-controlled unit (M) to evaluate not the signal which is supplied to it via said connection (17) but rather another signal which is available within the program-controlled unit.

5. Program-controlled unit according to Claim 4,
**characterized**
**in that** the other signal is a signal which indicates that the program-controlled unit (M) is not connected to the particular circuit (E).

## Revendications

1. Unité commandée par programme,
- l'unité (M) commandée par programme présentant une borne de raccordement (17) par laquelle il est possible de signaler à l'unité commandée par programme que l'unité commandée par programme est reliée à un autre circuit (E) défini,
- l'unité (M) commandée par programme partant de l'hypothèse qu'elle est reliée à l'autre circuit (E) défini si et aussi longtemps qu'un signal défini lui est apporté par ladite borne de raccordement,
- le signal qui doit être apporté à l'unité (M) commandée par programme pour que celle-ci présume qu'elle est reliée à l'autre circuit (E) défini étant un signal qui présente durablement un haut niveau de tension ou durablement un bas niveau de tension et
- l'unité (M) commandée par programme ne tentant pas de communiquer ou de coopérer avec l'autre circuit défini lorsqu'elle s'avère ne pas être reliée à l'autre circuit (E) défini.

2. Unité commandée par programme selon la revendication 1, **caractérisée en ce que** lorsque l'unité (M) commandée par programme s'avère ne pas être reliée à l'autre circuit (E) défini, elle ignore les données qui s'avèrent provenir de l'autre circuit défini.

3. Unité commandée par programme selon l'une des revendications précédentes, **caractérisée en ce que**
l'unité (M) commandée par programme présente une interface (8) réservée à l'échange de données entre l'unité commandée par programme et l'autre circuit (E) défini et **en ce que** lorsque l'unité commandée par programme s'avère ne pas être reliée à l'autre circuit défini, cette interface ne transfère pas les données qui lui sont apportées.

4. Unité commandée par programme selon l'une des revendications précédentes, **caractérisée en ce que** des dispositions (20, 22, 23) sont prises qui permettent à l'unité (M) commandée par programme d'évaluer un autre signal disponible à l'intérieur de l'unité commandée par programme au lieu du signal qui lui est apporté par ladite borne de raccordement (17).

5. Unité commandée par programme selon la revendication 4, **caractérisée en ce que** l'autre signal est un signal qui indique que l'unité (M) commandée par programme n'est pas reliée au circuit (E) défini.
